(19)

**Europäisches Patentamt**

**European Patent Office**

**Office européen des brevets**

(11) **EP 3 016 238 A1**

(12) **EUROPEAN PATENT APPLICATION**
published in accordance with Art. 153(4) EPC

(43) Date of publication:
**04.05.2016 Bulletin 2016/18**

(51) Int Cl.:
**H02J 7/02** (2006.01)　　　**H02J 7/00** (2006.01)

(21) Application number: **14818426.0**

(22) Date of filing: **24.06.2014**

(86) International application number:
**PCT/JP2014/066715**

(87) International publication number:
**WO 2014/208561 (31.12.2014 Gazette 2014/53)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.06.2013 JP 2013132886**

(71) Applicant: **NEC Corporation**
**Tokyo 108-8001 (JP)**

(72) Inventors:
• **SHIZUNO, Takayuki**
 **Tokyo 108-8001 (JP)**
• **OHTA, Yuko**
 **Tokyo 108-8001 (JP)**

(74) Representative: **Vossius & Partner**
**Patentanwälte Rechtsanwälte mbB**
**Siebertstrasse 3**
**81675 München (DE)**

(54) **CHARGING STATE MANAGEMENT METHOD, CHARGING STATE MANAGEMENT DEVICE, AND PROGRAM**

(57)　A charging state management method includes A1: information gathering step of gathering at least data of available power (for example, 100 kW) in a charging facility and data of minimum charging power (for example, 10 kW) for charging one electric vehicle, and A2: determining step of determining whether a standby-state charger is operable with the minimum charging power (for example, 10 kW) or more, assuming a case in which another electric vehicle is further added during charging of one or more electric vehicles, based on at least a value obtained by multiplying the number of all vehicles including the added vehicle (for example, n+1) by the minimum charging power (for example, 10 kW) and a value of the available power (for example, 100 kW).

**Fig. 3**

**Description**

TECHNICAL FIELD

The present invention relates to a charging state management method, a charging state management device, and a program in a power storing and charging system that includes a plurality of charger for electric vehicles, and more particularly, to a charging state management method, a charging state management device, and a program that can achieve comfortable system for users.

BACKGROUND ART

Various systems have been proposed recently for achieving a business model of receiving payments by setting a charger for electric vehicles or the like and providing charge service. Time for charging an electric vehicle depends on specifications of the secondary battery and performance of a charger, as a matter of course. However, such time is generally about several tens of minutes in quick charge and about several hours in normal charge.
For example, Patent Document 1 discloses a system that includes a plurality of charger for electric vehicles, a server connected with the chargers, and the like in which number of available chargers is determined and a service state is displayed while available resources in the system being monitored.

CITATION LIST

Patent Document 1: WO2012/118184

SUMMARY OF INVENTION

TECHNICAL PROBLEM

It is important to monitor resources dynamically as in Patent Literature 1. However, in the point of view of convenience for users and the like, development of a system has been desired in which a service state indicating that which charger of a plurality of chargers is available or not and what condition the charger is in can be accurately managed.
Therefore, an object of the present invention is to provide a charging state management method, a charging state management device, and a program that can achieve comfortable system for users

SOLUTION TO PROBLEM

To achieve the above object, a charging state management method of an embodiment of the present invention is a charging state management method in a charging facility including a plurality of charger for electric vehicles. The method comprises steps of:

gathering at least data of an available power in the charging facility and data of a minimum charging power for charging one electric vehicle; and
determining whether a standby-state charger is operable with the minimum charging power or more, assuming a case in which further electric vehicle is added during charging of one or more electric vehicles, based on at least a value that is calculated based on the number of all vehicles including the added vehicle and the minimum charging power; and
a value of the available power.

(Definitions of terms)

The term "available power" refers to an upper limit value of power available to the plurality of chargers disposed in the charging facility. The available power may be a predetermined value that is set in advance or a value that varies dynamically.
The term "minimum charging power" refers to minimum power required for charging an electric vehicle. As an example, the minimum charging power is fixedly set for a charger in advance based on the characteristics of an electric vehicle and a power storing and charging system.
The term "charging state management device" refers to a computer capable of performing the charging state management method according to an embodiment of the present invention. Examples of the charging state management device include a server. The charging state management device may be configured by a single computer or a plurality of computers.

Advantageous Effects of Invention

The present invention can provide a charging state management method, a charging state management device, and a program that can achieve comfortable system for users.

BRIEF DESCRIPTION OF DRAWINGS

Figure 1 is a diagram schematically illustrating a power storing and charging system of an embodiment of the present invention.
Figure 2 is a block diagram illustrating a schematic configuration of a charger.
Figure 3 is an explanatory diagram of a first charging state management mode.
Figure 4 is a flowchart showing an example of operations of the system in Figure 1.
Figure 5 is an explanatory diagram of a second charging state management mode.

DESCRIPTION OF EMBODIMENT

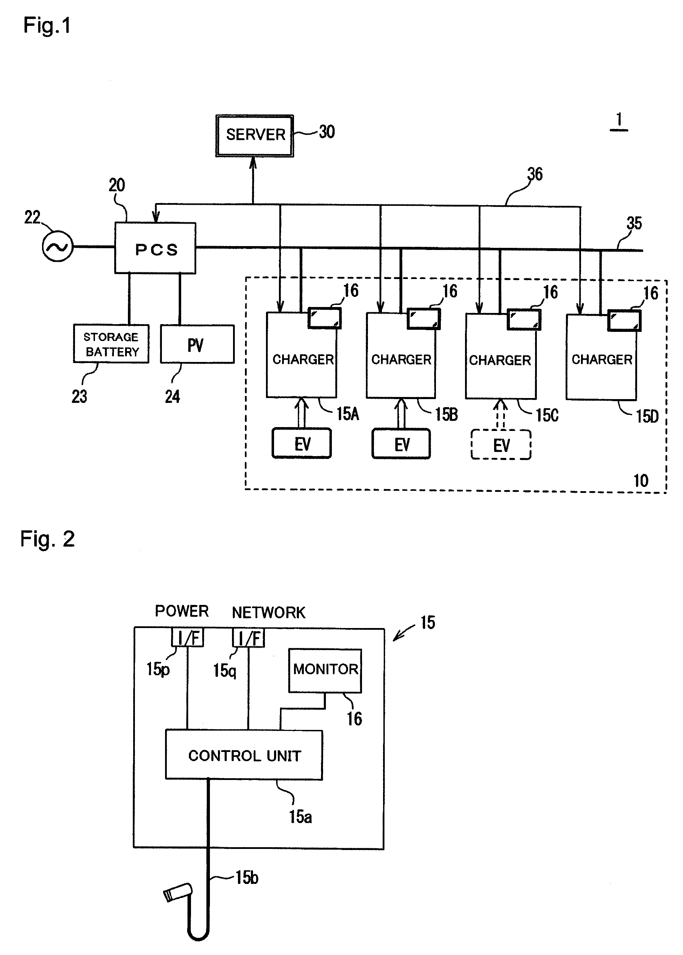

An embodiment of the present invention will be described with reference to the drawings. Configurations, functions, operations and the like in the following descriptions are those in an embodiment of the present invention and the present invention is not limited by them. Figure 1 is a diagram schematically illustrating a power storing and charging system according to an embodiment of the present invention.

In one example, a power storing and charging system 1 has a configuration including a storage battery 23 and a photovoltaic power generating device 24. The power storing and charging system 1 includes a PCS (Power Conditioner System) 20 that receives power from a system power 22 or the like and supplies the power to predetermined devices in the system, a charging facility 10 that has a plurality of chargers 15A to 15D for charging electric vehicles (EV), and a charging state management server 30 that manages the charging states of the chargers 15A to 15D or the like. A plurality of loads such as stores and houses, illustrations of which are omitted, may be connected to a distribution network 35.

The charging facility 10 is not limited to a particular facility but may be a charging station or the like in a shopping facility, a rest area, or the like, for example. The number of the chargers 15A to 15D disposed in the charging facility 10 is not limited to four. Two or less, three or less, or five or more of chargers may be disposed. The configuration of each charger 15A to 15D will be described later with reference to other drawings.

The PCS (Power Conditioner System) 20 is also referred to as a power conditioner, a power controller, or the like. The PCS 20 has a function for converting AC power to DC power and a function for supplying power from a system power or the like to the chargers 15A to 15D or loads (not illustrated) such as stores and houses. One PCS 20 is illustrated in Figure 1, but two or more PCSs may be disposed.

The PCS 20 may be configured to perform bidirectional communication with the outside via a predetermined network 36.

Power supplying means to be connected to the PCS 20 is not limited to particular means and may be the system power 22, one or more storage batteries 23, the photovoltaic power generating device 24, a wind power generating device, or the like. As a matter of course, one or a combination of two or more of them may be used.

In the present embodiment, as an example, the four chargers 15A to 15D are disposed in the charging facility 10. The chargers 15A to 15D may be products identical with one another, or may be a combination of different products. In the following descriptions, the chargers 15A to 15D are identical products and the chargers 15A to 15D are referred to as "chargers 15" simply in some cases. The chargers 15, each of which is a quick charger, for example, supply power to electric vehicles to charge secondary batteries of the electric vehicles.

As illustrated schematically in the block diagram of Figure 2, for example, the charger 15 may include a control unit 15a that controls the operation or the like of the charger, a feeding cable 15b to be connected to a connector for charging of an electric vehicle, and a monitor 16 (a display device) that displays predetermined information for users. The feeding cable 15b may include a communication line (not illustrated). Predetermined information communication with an ECU (Electric Control Unit) of an electric vehicle may be performed via the communication line.

The charger 15 includes an interface unit 15p for power, an interface 15q for communication, and the like. The charger 15 may have any outer shape. For example, in the charger 15, the control unit 15a and the like may be included in a vertical case and the monitor 16 may be disposed in a part of the case.

The monitor 16 may be a normal display, a touch panel display, or the like.

The control unit 15a may perform a part or all of the following operations:

performing charging by a constant-current and constant-voltage control method;
causing the monitor 16 to display information (for example, character information such as "you can charge an electric vehicle") relating to whether a concerned charger is available;
causing the monitor 16 to display a charging state (for example, a charging rate);
performing data communication with an electric vehicle connected; and the like.

Further, the control unit 15a may perform a part or all of the following operations:

transmitting, to the outside, data of minimum charging power (which will be described in detail later) for charging an electric vehicle that is set for a concerned charger in advance;
transmitting, to the outside, information relating to how much power is used for charging, and the like.

Information may be transmitted to the outside at a predetermined timing that is set in advance, or at an arbitrary timing in response to a request for transmission from the outside.
For example, power supplied from the charger 15 to an electric vehicle may be selected from among 10 kW, 20 kW, 30 kW, 40 kW, and 50 kW, which are gradually set. Alternatively, the power may be set to an arbitrary value.
Examples of an electric vehicle include a plug-in hybrid vehicle in addition to a battery electric vehicle. A secondary battery of an electric vehicle is not limited to a particular battery but a lithium-ion secondary battery and the like can be preferably used as a secondary battery of an electric vehicle.
The charging state management server 30, which is a computer including a CPU, a memory, a storage device (for example, a hard disk), an input/output interface, and the like, performs a predetermined operation in accordance with a computer program installed to the computer. The program may be stored in the server 30 via a network, or may be stored in the server 30 by reading a computer program stored in a storage medium.
The charging state management server 30 may have the following function units implemented by a computer program:

(1) an information gathering unit that gathers at least data of available power (for example, 100 kW) in a concerned charging facility and data of minimum charging power (for example, 10 kW) for charging an electric vehicle;
(2) a first determining unit that determines whether a standby-state charger is operable with the minimum charging power (for example, 10 kW) or more, assuming a case in which another electric vehicle is further added during charging of one or more electric vehicles, based on at least:

a value obtained by multiplying the number of all vehicles (for example, n+1) including the added vehicle by the minimum charging power (for example, 10 kW); and
a value of available power (for example, 100 kW); and/or

(3) a second determining unit that determines whether a standby-state charger is operable with the minimum charging power (for example, 10 kW) or more , assuming a case where another electric vehicle is further added during charging of one or more electric vehicles, based on at least:

a value of the available power (for example, 100 kW);
a value of the minimum charging power (for example, 10 kW); and
a value of power being used (for example, 100 kW).

The charging state management server 30 may further have the following function unit implemented by a computer program.
(4) A service state displaying unit that causes a display device (the monitor 16) capable of displaying predetermined information to display information relating to whether a standby-state charger is available.

In Figure 1, only one charging state management server 30 is illustrated. However, the charging state management method according to the present invention may be performed by distributed processing by a plurality of computers.
Next, the operations of the power storing and charging system 1 having the above configuration of the present embodiment will be described while particularly focusing on the operations of the charging facility 10.

(First charging state management mode)

When one or more electric vehicles are being charged, another electric vehicle may be added. However, in this case, when minimum charging power or more can be allocated to each of the electric vehicles including the added electric vehicle, all chargers are made available in the present mode.

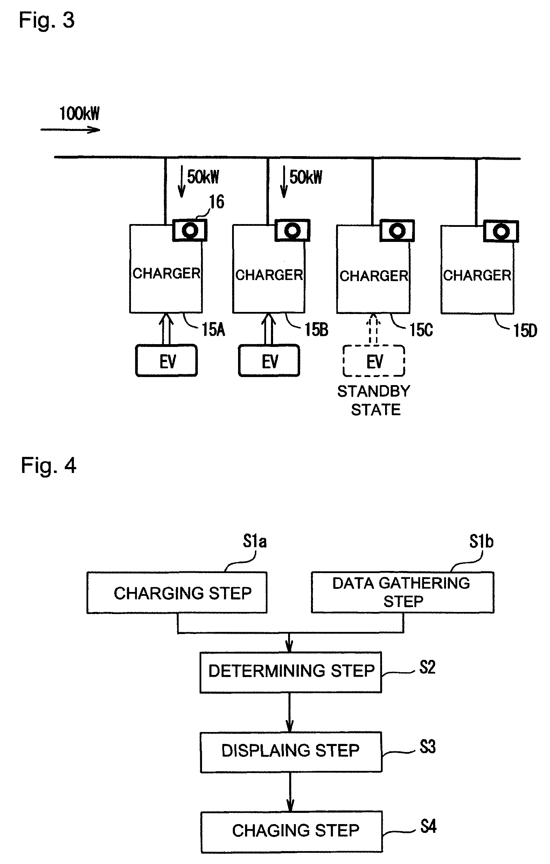

Figure 3 illustrates a state in which the chargers 15A and 15B are charging two respective electric vehicles while the two other standby-state chargers 15C and 15D are in the charging facility 10 in Figure 1. Figure 4 is a flowchart for explaining the operations in the first charging state management mode.

Numerical values that are specifically assumed herein are as follows:

available power in the charging facility 10 ... 100 kW;
power used by each of the chargers 15A and 15B ... 50 kW; and
minimum charging power of each charger ... 10 kW.

As shown in the flowchart in Figure 4, in step S1a, the chargers 15A and 15B charge two respective electric vehicles.

In data gathering step S1b, via a network, the charging state management server 30 gathers at least the following data:

data of available power (100 kW) in the charging facility; and
data of the minimum charging power (10 kW).

A timing at which data gathering step S1b is performed is not limited to a particular timing. For example, data gathering step S1b may be performed before charging step S1a. To gather data, for example, the charging state management server 30 may perform data communication with the PCS 20 or the chargers 15A and 15B or the like and gathers data from these devices.

Next, determination step S2 is performed for determining whether the standby-state chargers 15C and 15D are available. More specifically, the charging state management server 30 calculates whether a value obtained by multiplying the number of all the electric vehicles (for example, n+1) by the minimum charging power (for example, 10 kW) per electric vehicle is equal to or less than a value of the available power (for example, 100 kW) in the charging facility. More specifically, the calculation can be made by using the following expression:

$$\text{(Available power)} \geq \text{Number of all electric vehicles (n+1)} \times \text{minimum charging power}$$

In this example, the available power is 100 kW, the number of all the electric vehicles (n+1) is three, and the minimum charging power is 10 kW. Thus,

$$100 \text{ kW} > 3 \times 10 \text{ kW}.$$

As a result, the charging state management server 30 determines that the standby-state chargers are operable with the minimum charging power or more.

Next, in displaying step S3, the display contents of the monitors 16 of the chargers 15 are controlled. That is, when the charging state management server 30 determines that the standby-state chargers are operable with the minimum charging power or more, the charging state management server 30 causes each of the chargers 15 to display characters or an image indicating that the charger 15 is available.

On the other hand, when the charging state management server 30 determine that the standby-state chargers are not operable with the minimum charging power or more, the charging state management server 30 causes each of the chargers 15C and 15D to display characters or an image indicating that the charger 15C or 15D is unavailable.

Next, when the standby-state chargers are available and a third electric vehicle is added (in one example), all the three electric vehicles are charged at charging step S4. That is, the supplied power to the chargers 15A to 15C are adjusted as appropriate (for example, to 50 kW, 40 kW, and 10 kW) so that the three electric vehicles are charged simultaneously.

Various rules can be applied as a distribution rule for the chargers 15A to 15C in this case, and the distribution rule is not limited to a particular rule. For example, power may be distributed to the chargers 15A to 15C equally. For example, the power supplied to the chargers 15A to 15C may be changed based on a control signal transmitted from the charging state management server 30.

Determination step S2 may be continuously performed at predetermined time intervals, for example. When charging of one of two electric vehicles being charged is completed, for example, the value of "the number of all the electric vehicles (n+1)" is decreased and a result of the above expression changes. In one example, at such a timing, the displays of the standby-state chargers 15C and 15D are changed from the display indicating that charging cannot be performed to the displays indicating that charging can be performed.

To complete charging of the chargers 15, a conventionally known method can be used, for example. Descriptions of such a method are omitted here.

A case where an electric vehicle waits for only one of the two chargers 15C and 15D has been described. However, two electric vehicles may wait for the chargers 15C and 15D. Also in this case, similarly, whether the chargers are available may be determined and the displays of the monitors 16 of the chargers 15 may be changed according to the determination result.

The first charging state management mode has been described. According to this mode, in a case where two of four chargers are in a standby state, for example, when minimum charging power or more is secured for each charger, the chargers 15C and 15D can start to charge the two waiting electric vehicles with at least the minimum charging power or more. According to this mode, a user can certainly charge an electric vehicle with the minimum charging power or more regardless of which of the charger 15C or 15D is used by the user.

As described above, according to the system in the present embodiment, while how much resources are available is accurately confirmed, whether a charger is available or how much power can be used is appropriately managed. In addition, since such information is displayed on the monitor or the like of the charger, the convenience for users is further enhanced.

Since the order for waiting for the standby-state chargers 15C and 15D do not matter, no sense of unfairness is given to users who utilize the chargers. Also, limited resources (for example, power supply of 100 kW from the PCS 20) can be utilized for as many chargers as possible.

(Second charging state management mode)

The above first mode is directed to a case in which when an electric vehicle is added, the amount of supplied power to the chargers being used is reduced to charge the added electric vehicle. However, in a mode which will be described below, whether a standby-state charger is available is determined without the above power distribution. Since a series of operations is basically performed in the same step order as in the first mode, the descriptions will be given with reference to the flowchart in Figure 4.

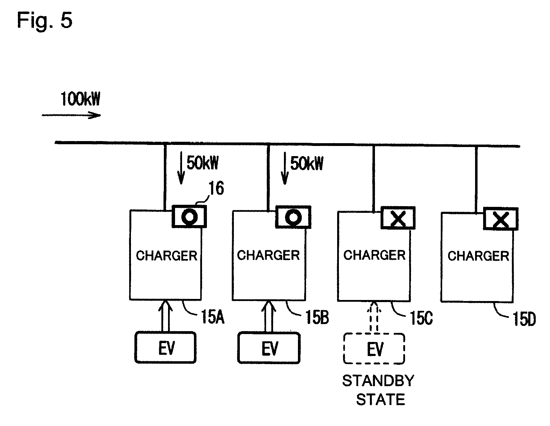

Similarly to the above first mode, the present mode assumes the following condition (see also Figure 5):

available power in a charging facility ... 100 kW;
power used by each of the chargers 15A and 15B ... 50 kW; and
minimum charging power of each charger ... 10 kW.

Charging step S1a can be performed as in the first mode. At information gathering step S1b, the charging state management server 30 gathers at least the following information:

data of available power (for example, 100 kW) in the charging facility;
data of minimum charging power (for example, 10 kW); and
data of power being used (50 kW+50 kW=100 kW) that is power for chargers being used.

To gather data, as in the first mode, the charging state management server 30 may communicate with the PCS 20 or the chargers 15A, and 15B or the like and gather data from these devices. For example, the information relating to "power being used" may be data that the charging state management server 30 obtains by gathering and summing up data of the current charging power from each charger.

Next, at a step (determination step S2) for determining whether the standby-state chargers 15C and 15D are available, the charging state management server 30 determines whether a value obtained by adding a value of the power being used and a value of the minimum charging power is equal to or less than the available power in the system. More specifically, the calculation can be made by using the following expression.

$$(\text{Available power}) \geq (\text{Power being used}) + (\text{Minimum charging power})$$

In this example, the available power is 100 kW, the power being used is 100 kW, and the minimum charging power is 10 KW. Thus,

$$100 \text{ kW} < 100 \text{ kW} + 10 \text{ kW}.$$

As a result, the charging state management server 30 determines that the standby-state chargers are unavailable.

Next, in displaying step S3, the charging state management server 30 causes each of the chargers 15A and 15B to display characters or an image indicating that the charger is available and each of the chargers 15C and 15D to display characters or an image indicating that the charger is unavailable (see also Figure 5).

Thereafter, the charging state management server 30 determines whether the condition of the above expression is satisfied while monitoring the statuses of the chargers 15A and 15B that are performing charging. For example, when charging of an electric vehicle is completed or the charging is sifted from constant current charging to constant voltage charging, the value of "the power being used" is decreased. Thus, the condition of the above expression is satisfied.

When the condition of the above expression is satisfied and charging can be performed, each of the standby-state chargers 15C and 15D also display that the charger can be used and charging of an electric vehicle that has waited for the charger 15C is started with predetermined power (for example, 50 kW) (step S4).

According to the second charging state management mode, even when another electric vehicle that requires to be charged appears, power supplied to other electric vehicles that are being charged is not reduced. Accordingly, the electric vehicles that are being charged can be charged in a short time. In other words, in such a charging mode, priority is given to a charging time over the number of vehicles that can be charged. This charging mode is suitable to be used in commercial facilities or the like in which a staying time is relatively short.

An example of the present invention has been described. However, the present invention is not limited to the above descriptions but can be modified as appropriate.

(a1) In the above descriptions, the monitors 16 of the chargers 15 display predetermined information. However, an information terminal (a display device such as a cellular phone) that a user possesses may display predetermined information. Alternatively, an information terminal installed in an electric vehicle (a display device such as a car navigation system).

(a2) To achieve this, the charging state management server 30 (or a different server) may be configured to transmit information relating to whether the chargers 15A to 15D are available to the information terminal via a network.

(a3) Alternatively, the charging state management server 30 (or another server) may be configured to transmit information relating to whether the chargers are available to the chargers first, and thereafter, the chargers may transmit the information to a terminal or the like of a user by using a wireless communication function.

(b1) Contents to be displayed on the monitors or the like may include not only information relating to whether a concerned charger is available but also available power.

(b2) When a time (a time, a waiting time, or the like) at which a standby-state charger becomes available can be predicted, information relating to the time may also be displayed.

(Remarks)

The present description discloses the following inventions:

1. A charging state management method in a charging facility including a plurality of chargers for electric vehicles, the method comprising steps of

A1: gathering at least data of an available power in the charging facility (for example, 100 kW) and data of a minimum charging power for charging one electric vehicle (for example, 10 kW); and

A2: determining whether a standby-state charger is operable with the minimum charging power (for example, 10 kW) or more, assuming a case in which further electric vehicle is added during charging of one or more electric vehicles, based on at least

a value that is calculated based on the number of all vehicles including the added vehicle (for example, n+1) and the minimum charging power (for example, 10 kW); and
a value of the available power (for example, 100 kW).

The expression "calculated based on the number of all vehicles including the added vehicle and the minimum charging power" does not mean that the calculation is necessarily based on the two parameters. It suffices that a predetermined reference value is obtained by using at least these two parameters.

2. The charging state management method according to the 1, wherein in the determining step,
a value obtained by multiplying the number of all vehicles (for example, n+1) by the minimum charging power (for example, 10 kW) is calculated to determine whether the calculated value is equal to or less than the value of the available power (for example, 100 kW), and
when the calculated value is equal to or less than the value of the available power, it is determined that standby-state charger is operable.

3. The charging state management method according to the 1 or 2, further comprising a step of causing a display device capable of displaying predetermined information to display information relating to whether a standby-state charger is available.

4. A charging state management method in a charging facility including a plurality of charger for electric vehicles, the method comprising steps of:

B1: gathering at least data of an available power in the charging facility, data of minimum charging power for charging one electric vehicle, and data of power being used (for example, 100 kW) that is total power of chargers being used; and
B2: determining whether a standby-state charger is operable with the minimum charging power or more, assuming a case in which further electric vehicle is added during charging of one or more electric vehicles, based on at least
a value of the available power (for example, 100 kW);
a value of the minimum charging power (for example, 10 kW); and
a value of the power being used (for example, 100 kW).

5. The charging state management method according to the 4, wherein in the determining step,
a value obtained by adding the value of the power being used (for example, 100 kW) and the value of the minimum charging power (for example, 10 kW) is calculated to determine whether the calculated value is equal to or less than the value of the available power (for example, 100 kW), and
when the calculated value is equal to or less than the value of the available power, it is determined that standby-state charger is operable.

6. The charging state management method according to the 4 or 5, further comprising a step of causing a display device capable of displaying predetermined information to display information relating to whether a standby-state charger is available.

7. The charging state management method according to the 3 or 6, wherein in the service state displaying step,
a display device provided to the charger is caused to display the information relating to a service state, or
a display device provided to an electric vehicle or a display device that a user has is caused to display the information relating to a service state.

8-1. A charging state management server for managing a charging state in a charging facility including a plurality of charger for electric vehicles, the server comprising:

C1: data gathering means that gathers at least data (for example, 100 kW) about available power in the charging facility and data of minimum charging power (for example, 10 kW) for charging one electric vehicle; and
C2: determining means that determines whether a standby-state charger is operable with the minimum charging power (for example, 10 kW) or more, assumes a case in which another electric vehicle is further added during charging of one or more electric vehicles, based on at least:

a value that is calculated based on the number of all vehicles including the added vehicle (for example, n+1) and the minimum charging power (for example, 10 kW); and
a value of the available power (for example, 100 kW).

9-1. A computer program for managing a charging state in a charging facility including a plurality of charger for electric vehicles, wherein the computer program causes one or more computers to function as:

**EP 3 016 238 A1**

D1: data gathering means that gathers at least data of available power in the charging facility (for example, 100 kW) and data of minimum charging power (for example, 10 kW) for charging one electric vehicle; and
D2: determining means that determines whether a standby-state charger is operable with the minimum charging power (for example, 10 kW) or more, assuming a case in which another electric vehicle is further added during charging of one or more electric vehicles, based on at least:

a value that is calculated based on the number of all vehicles including the added vehicle (for example, n+1) and the minimum charging power (for example, 10 kW); and
a value of the available power (for example, 100 kW). A medium storing this program therein.

8-2. A charging state management server for managing a charging state in a charging facility including a plurality of charger for electric vehicles, the server comprising:

E1: data gathering means that gathers at least data of available power in the charging facility, data of minimum charging power for charging one electric vehicle, and data of power being used (for example, 100 kW) that is total power of chargers being used; and
E2: determining means that determines whether a standby-state charger is operable with the minimum charging power (for example, 10 kW) or more, assuming a case in which another electric vehicle is further added during charging of one or more electric vehicles, based on at least:

a value of the available power (for example, 100 kW);
a value of the minimum charging power (for example, 10 kW); and
a value of the power being used (for example, 100 kW).

9-2. A computer program for managing a charging state in a charging facility including a plurality of charger for electric vehicles, wherein
the computer program is caused to function as the charging state management server according to the 8-2.
10. A charging facility management device for managing a charging facility including a plurality of charger for electric vehicles, the device is configured to determine whether a standby-state charger that is not connected to the electric vehicle can charge the electric vehicle, based on:

data indicating an upper limit value of total power that is a total of power that the plurality of chargers can output to charge an electric vehicle;
data indicating minimum charging power required for the plurality of chargers to charge an electric vehicle; and
number of chargers connected to the electric vehicle and are performing charging of the plurality of chargers, whether a standby-state charger that is not connected to the electric vehicle can charge the electric vehicle is determined.

REFERENCE SIGNS LIST

1 POWER STORING AND CHARGING SYSTEM

10 CHARGING FACILITY
15A TO 15B CHARGER
15A CONTROL UNIT
15B FEEDING CABLE
20 PCS
22 SYSTEM POWER
23 STORAGE BATTERY
24 PHOTOVOLTAIC POWER GENERATION
30 CHARGING STATE MANAGEMENT SERVER (CHARGING STATE MANAGEMENT DEVICE)
35 DISTRIBUTION NETWORK
36 NETWORK

**Claims**

1.  A charging state management method in a charging facility including a plurality of chargers for electric vehicles, the method comprising steps of:

    A1: gathering at least data of an available power in the charging facility and data of a minimum charging power for charging one electric vehicle; and
    A2: determining whether a standby-state charger is operable with the minimum charging power or more, assuming a case in which further electric vehicle is added during charging of one or more electric vehicles, based on at least
    a value that is calculated based on the number of all vehicles including the added vehicle and the minimum charging power; and
    a value of the available power.

2.  The charging state management method according to Claim 1, wherein in the determining step,
    a value obtained by multiplying the number of all vehicles by the minimum charging power is calculated to determine whether the calculated value is equal to or less than the value of the available power, and
    when the calculated value is equal to or less than the value of the available power, it is determined that standby-state charger is operable.

3.  The charging state management method according to Claim 1 or 2, further comprising a step of causing a display device capable of displaying predetermined information to display information relating to whether a standby-state charger is available.

4.  A charging state management method in a charging facility including a plurality of chargers for electric vehicles, the method comprising steps of:

    B1: gathering at least data of an available power in the charging facility, data of minimum charging power for charging one electric vehicle, and data of power being used that is total power of chargers being used; and
    B2: determining whether a standby-state charger is operable with the minimum charging power or more, assuming a case in which further electric vehicle is added during charging of one or more electric vehicles, based on at least
    a value of the available power;
    a value of the minimum charging power; and
    a value of the power being used.

5.  The charging state management method according to Claim 4, wherein in the determining step,
    a value obtained by adding the value of the power being used and the value of the minimum charging power is calculated to determine whether the calculated value is equal to or less than the value of the available power, and
    when the calculated value is equal to or less than the value of the available power, it is determined that standby-state charger is operable.

6.  The charging state management method according to Claim 4 or 5, further comprising a step of causing a display device capable of displaying predetermined information to display information relating to whether a standby-state charger is available.

7.  The charging state management method according to Claim 3 or 6, wherein in the service state displaying step,
    a display device provided to the charger is caused to display the information relating to a service state, or
    a display device provided to an electric vehicle or a display device that a user has is caused to display the information relating to a service state.

8.  A charging state management device for managing a charging state in a charging facility including a plurality of charger for electric vehicles, the device comprising:

    C1: data gathering means that gathers at least data of available power in the charging facility and data of minimum charging power for charging one electric vehicle; and
    C2: determining means that determines whether a standby-state charger is operable with the minimum charging power or more, assuming a case in which further electric vehicle is added during charging of one or more electric vehicles, based on at least:

> a value that is calculated based on the number of all vehicles including the added vehicle and the minimum charging power; and
> a value of the available power.

9. A charging facility management device for managing a charging facility including a plurality of charger for electric vehicles, the device is configured to determine whether a standby-state charger that is not connected to the electric vehicle can charge the electric vehicle, based on:

> data indicating an upper limit value of total power that is a total of power that the plurality of chargers can output to charge an electric vehicle;
> data indicating minimum charging power required for the plurality of chargers to charge an electric vehicle; and
> number of chargers connected to the electric vehicle and being performing charging of the plurality of chargers.

10. A computer program for managing a charging state in a charging facility including a plurality of charger for electric vehicles, wherein the computer program causes one or more computers to function as:

> D1: data gathering means that gathers at least data of available power in the charging facility and data of minimum charging power for charging one electric vehicle; and
> D2: determining means that determines whether a standby-state charger is operable with the minimum charging power or more, assuming a case in which further electric vehicle is added during charging of one or more electric vehicles, based on at least:

>> a value that is calculated based on the number of all vehicles including the added vehicle and the minimum charging power; and
>> a value of the available power.

Fig.1

SERVER —30

1

20

22

36

35

PCS

STORAGE
BATTERY

PV

23

24

16        16        16        16

CHARGER   CHARGER   CHARGER   CHARGER

EV        EV        EV

15A       15B       15C       15D

10

Fig. 2

POWER    NETWORK

15

I/F       I/F

MONITOR

15p      15q

16

CONTROL UNIT

15a

15b

Fig. 3

100kW
→

↓50kW    ↓50kW

16

| CHARGER | CHARGER | CHARGER | CHARGER |

15A    15B    15C    15D

| EV | EV | EV |

STANDBY
STATE

Fig. 4

S1a                                    S1b

| CHARGING STEP | DATA GATHERING STEP |

DETERMINING STEP — S2

DISPLAING STEP — S3

CHAGING STEP — S4

Fig. 5

## INTERNATIONAL SEARCH REPORT

| International application No. |
| --- |
| PCT/JP2014/066715 |

**A. CLASSIFICATION OF SUBJECT MATTER**
*H02J7/02(2006.01)i, H02J7/00(2006.01)i*

According to International Patent Classification (IPC) or to both national classification and IPC

**B. FIELDS SEARCHED**

Minimum documentation searched (classification system followed by classification symbols)
*H02J7/00-7/12, 7/34-7/36;*

Documentation searched other than minimum documentation to the extent that such documents are included in the fields searched
Jitsuyo Shinan Koho        1922-1996   Jitsuyo Shinan Toroku Koho   1996-2014
Kokai Jitsuyo Shinan Koho   1971-2014   Toroku Jitsuyo Shinan Koho    1994-2014

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2013-85440 A  (Toyota Industries Corp.), 09 May 2013 (09.05.2013), paragraph [0057] (Family: none) | 1-10 |
| A | JP 2012-143042 A  (The Chugoku Electric Power Co., Inc.), 26 July 2012 (26.07.2012), entire text; all drawings (Family: none) | 1-10 |

☐ Further documents are listed in the continuation of Box C.      ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>    31 July, 2014 (31.07.14) | Date of mailing of the international search report<br>    12 August, 2014 (12.08.14) |
| --- | --- |
| Name and mailing address of the ISA/<br>    Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012118184 A